# EUROPÄISCHE PATENTANMELDUNG

(11) **EP 0 604 688 A1**
(43) Veröffentlichungstag der Anmeldung: **06.07.1994**
(21) Anmeldenummer: 92250364.4
(22) Anmeldetag: 30.12.1992
(51) Int. Cl.: G11B 33/04

(54) **Verpackung für einen scheibenförmigen Aufzeichnungsträger**

(71) Anmelder: Schwerdtle & Schantz GmbH, D-12359 Berlin (DE)
(72) Erfinder: Ulrich, Peter, W-1000 Berlin (DE)
(74) Vertreter: Christiansen, Henning, Dipl.-Ing.

(57) **Zusammenfassung**

Verpackung für mindestens einen scheibenförmigen Aufzeichnungsträger, vorzugsweise eine CompactDisk oder CD-ROM, bestehend aus einem Trägerelement zur Halterung des Aufzeichnungsträger unter möglichst geringflächigem mechanischem Kontakt zwischen Aufzeichnungsträger und Trägerelement, wobei das Trägerelement aus einem folienförmigen, insbesondere kartonartigen Werkstoff besteht, der mit einer verbleibenden Vorspannung wölb-oder faltbar ist, sowie ferner zwei in einem Abstand, der im wesentlichen dem Durchmesser des Aufzeichnungsrägers entspricht, gehaltene V-förmig profilierte - als Winkel gefaltete oder in sonstiger Weise verbundene - Faltungen bildende Bereiche vorgesehen sind, deren Öffnungsseiten einander zugewandt sind, der Aufzeichnungsträger von mindestens einer Seite her in die Faltungen derart einschiebbar ist, daß die Faltenkanten tangential zum Außenumfang des Aufzeichnungsträgers gerichtet sind und der Aufzeichnungsträger im Bereich seines Umfangs im wesentlichen ausschließlich innerhalb der V-förmig profilierten Bereiche geführt bzw. gehalten ist und an die Faltenkanten der Faltungen jeweils Faltenwände (20.1, 20.2) anschließen, welche im wesentlichen streifenförmig ausgebildet sind und sich über diejenigen ihrer Kanten, die von der Faltenkante des V-förmigen Bereichs abgewandt sind, innerhalb der Umhüllung und/oder an benachbarten Trägerelementen abstützen, so daß das Trägerlement in diesen Bereichen geführt ist, während sich der Aufzeichnungsträger seinerseits in der Tiefe des V-förmigen Bereichs in der Nähe der Faltenkanten abstützt.

## Beschreibung

Die Erfindung betrifft eine Verpackung der im Oberbegriff des Anspruchs 1 angegebenen Art.

Verpackungen für scheibenförmige Aufzeichnungsträger, vorzugsweise Compact-Disks (CD) und als Compact-Disks ausgebildete Datenspeicher (CD-ROM), sind in einer Vielzahl von Auführungsformen bekannt, die einerseits eine vor mechanischen Beschädigungen im wesentlichen sichere Aufbewahrung der Datenträger ermöglichen und andererseits einem bequemen Zugriff durch den Benutzer gewährleisten sollen. Die Verpackungen weisen an ihren Außen- und/oder Innenseiten verschiedene, dem Datenträger zugegeordnete Informationsaufdrucke auf und verfügen darüberhinaus auch gegebenenfalls über geeignete Möglichkeiten zum Unterbringen von Beiheften in ihrem Inneren. Üblich ist die bekannte Kunststoffverpackung, bei der ein Trägerelement mit einer die CD zentrierenden Aufnahme innerhalb einer Klappschatulle aus Kunststoff vorgesehen ist. Diese Verpackung ist kostenintensiv und besteht und weist verschiedene Kartoneinlagen auf, so daß sie aufwendig zu entsorgen ist.

Weiterhin ist aus der EP-A-0 503 171 eine Schutzhülle für einen scheibenförmigen Aufzeichnungsträger bekannt, die eine Grundfläche zur Aufnahme des Aufzeichnugsträgers aufweist, auf der reliefartige Erhebungen außerhalb des von dem Aufzeichnungsträger eingenommenen Bereichs und eine, gegebenenfalls geteilte, zentrale Erhebung zur Zentrierung des Mittelloches des Aufzeichnungsträgers vorgesehen sind. An die Grundfläche ist mittels einer scharnierartigen Verbindung eine Abdeckfläche klappbar angelenkt, wobei die Erhebungen auf der Grundfläche die Dicke des Aufzeichnungsträgers überragen. Die genannten Erhebungen bestehen dabei aus einer eigensteifen Kunststoff-Folie und werden durch einen Tiefzieh- oder Prägevorgang in der gewünschten Abmessung erzeugt.

Die bekannten Verpackungen für scheibenförmige Aufzeichnungsträger sind darüber hinaus auch schon deswegen nachteilig, weil einerseits das Ablegen des Aufzeichnungsträgers in die Verpackung wegen der Fixierung des Mittelloches in der Zentiererhebung relativ umständlich ist und es zum anderen bei häufigem Entnehmen des Aufzeichnungsträgers zu einer Abnutzung der Haltenasen der Zentriererhebung kommen kann, so daß dann eine sichere Halterung des Aufzeichnungsträgers in der Verpackung nicht mehr gewährleistet ist.

Darüberhinaus ist es ungünstig, daß derartige, aus verschiedenen Materialien zusammengesetzte Verpackungen, nicht ohne aufwendige Trennung dieser Materialien als Rohstoffe wiederverwertet werden können.

Schließlich zwingen Verpackungen, bei denen die Aufzeichnungsträger durch mechanischen Druck in der Umhüllung arretiert werden müssen, zu besonderen Maßnahmen bei der Durchführung von automatisierten Verpackungsverfahren und sind dadurch auch in der Herstellung kostenaufwendiger.

Ausgehend von den Mängeln des Standes der Technik liegt der Erfindung die Aufgabe zugrunde, eine materialeinheitliche Verpackung der eingangs genannten Gattung zu schaffen, die eine sichere Positionierung der Aufzeichnungsträger in der Verpackung gewährleistet und gleichzeitig geeignet ist, den Aufwand bei der automatischen Verpackung derartiger Aufzeichnungsträger herabzusetzen.

Diese Aufgabe wird mit den kennzeichnenden Merkmalen des Anspruchs 1 gelöst.

Die Erfindung schließt die Erkenntnis ein, daß ein scheibenförmiger Aufzeichnungsträger sicher in einer Verpackung gehalten werden kann, wenn er durch ein Trägerelement im Bereich seines Randes gehalten wird und innerhalb dieser Halterung in einer radialen Richtung verschieblich ist.

Die Lagesicherung sowohl der Haltevorrichtung innerhalb des Basisteils der Verpackung als auch die des Aufzeichnungsträgers in der Halteinrichtung erfolgt durch Form-und Kraftschluß. Dadurch daß das Trägerelement aus einem folienförmigen, insbesondere kartonartigen Werkstoff besteht, der mit einer verbleibenden Vorspannung wölb- oder faltbar ist, und zwei in einem Abstand, der im wesentlichen dem Durchmesser des Aufzeichnungsrägers entspricht, gehaltene V-förmig profilierte - als Winkel gefaltete oder in sonstiger Weise verbundene - Faltungen bildende Bereiche vorgesehen sind, deren Öffnungsseiten einander zugewandt sind, läßt sich der Aufzeichnungsträger von mindestens einer Seite her in die Faltungen derart einschieben, daß die Faltenkanten tangential zum Außenumfang des Aufzeichnungsträgers gerichtet sind.

Dabei tangieren die Schenkel des "V" in ihren dem Scheitel benachbarten Bereichen die Kanten der Deckflächen des Aufzeichnungsträgers. Dabei entsteht aufgrund der Elastizität des folienförmigen Materials eine Art Klemmwirkung. Somit wird der Aufzeichnungsträger im Bereich seines Umfangs im wesentlichen ausschließlich innerhalb der V-förmig profilierten Bereiche geführt bzw. gehalten. Damit ist der Aufzeichnungsträger nur in Bereichen, die außerhalb der mit einer Aufzeichnung bedeckten Oberfläche gelegen sind, vom Trägerelement berührt.

Der Aufzeichnungsträger wird dabei in vorteilhafter Weise durch Einschieben in die Trägerelement eingebracht und durch Herausziehen im Bedarfsfall wieder entnommen. Wird der Aufzeichnungsträger gemeinsam mit der Trägerelement aus der Verpackung entnommen, entsteht somit - bedingt durch das Bestreben der gefalteten Seitenwände der Trägerelement, sich zu strecken und damit eine nach innen gerichtete radiale Druckkomponente auf den Aufzeichnungsträger auszuüben- auf einfache Weise im Bereich der Faltenkanten eine Klemmwirkung zwischen Aufzeichnungsträger und Trägerelement.

Diese zusätzliche Klemmwirkung ist derart bemessen, daß sie einerseits ein ungewollten Herausgleiten des Aufzeichnungsträgers aus der Trägerelement verhindert und anderseits eine Entnahme des Aufzeichnungsträgers ohne besonderen Kraftaufwand ermöglicht.

An die Faltenkanten der Faltungen schließen dabei jeweils Faltenwände an, welche im wesentlichen streifenförmig ausgebildet sind und sich über diejenigen ihrer Kanten, die von der Faltenkante des V-förmigen Bereichs abgewandt sind, innerhalb der Umhüllung und/oder an benachbarten Trägerelementen abstützen, so daß das Trägerlement in diesen Bereichen geführt ist, während sich der Aufzeichnungsträger seinerseits in der Tiefe des V-förmigen Bereichs in der Nähe der Faltenkanten abstützt.

Insbesondere ermöglicht die Erfindung das Schaffen einer Verpackung, die eine, den erhöhten Anforderungen durch den Umweltschutz entsprechende, verbesserte Recycling-Fähigkeit aufweist und einfachere Handhabbarkeit der in ihr aufbewahrten Aufzeichnungsträger ermöglicht.

Die Art und Weise der Positionierung des Aufzeichnungsträgers in seiner Verpackung gewährleistet eine bequeme und unkomplizierte Handhabung und trägt gleichzeitig zur Vereinfachung und Kostenreduzierung bei der automatisierten Verpackung bei.

Besonders vorteilhaft bei der Erfindung ist ferner, daß die Herstellungskosten im Bereich der Kosten von Einlageblättern liegen, die bei den herkömmlichen Kunststoffverpackungen noch zusätzlich erforderlich sind. Da die Bedruckung des bevorzugt zu verwendenden Kartonmaterials keinen wesentlichen zusätzlichen Aufwand erfordert, ist es mit den erfindungsgemäßen Maßnahmen möglich, individuell ausgestaltete Verpackungen entsprechend den heutigen vom Umweltschutz her gestellten Anforderungen auf günstige Weise zu erstellen.

Entsprechend einer bevorzugten Ausführungsform der Erfindung besteht das Trägerlement aus einer zu einem im wesentlichen quaderförmigen Hohlkörper ausgestalteten Faltanordnung, die offene Stirnseiten aufweist. Die an den beiden Seiten vorgesehene Faltung des Trägerelements gewährleistet - aufgrund der damit verbundenen Elastizität der Trägerelement senkrecht zur Bewegung des Aufzeichnugsträgers bei Entnahme aus bzw. bei Einbringen in diese - eine zur Lagesicherung ausreichende Klemmwirkung zwischen den Faltenelementen der Seitenwände und der Peripherie des scheibenförmigen Aufzeichnungsträgers, wenn dieser in einen Bereich der Faltung mit nach außen weisenden Spitzen eingebracht ist. Andererseits ist die Klemmwirkung in ihrer Größe derart bemessen, daß es nur eines geringen Kraftaufwandes bedarf, um den Aufzeichnungsträger der Verpackung durch Herausziehen aus der Trägerelement erneut zu entnehmen.

Die Faltung der Seitenwände erstreckt sich beidseitig parallel zur Längsrichtung des Trägerelements, sie ist an beiden Seitenwänden gleichartig ausgebildet und ist in Erstreckungsrichtung in zwei Abschnitte unterteilt. Der der Einschub- bzw. Entnahmeseite der Trägerelement für den Aufzeichnungsträger zugewandte Abschnitt der geraden Faltung an den Seitenwänden besitzt eine Faltenspitze, die aus dem von der Trägerelement umfaßten Volumen herausweisend gerichtet ist. Der Abstand von der Faltenspitze der einem Seitenwand zur entsprechenden Faltenspitze der gegenüberliegenden Seitenwand entspricht im wesentlichen dem Durchmesser des scheibenförmigen Aufzeichnugsträgers. Der in diesen Bereich eingebrachte Aufzeichnugsträger wird an seiner Peripherie zwischen den entsprechenden Wänden der jeweiligen Faltung hauptsächlich durch Formschluß und - aufgrund der Elastizität der gefalteten Seitenwände und ihren Bestreben, einen ungefalteten Zustand einzunehmen - zusätzlich durch Kraftschluß fixiert. Der Kraftschluß besteht in einer relativ geringen, zur Achse des Aufzeichnungsträgers gerichteten Klemmwirkung, die bei Einbringen oder Entnehmen des Aufzeichungsträgers mühelos überwunden oder in günstiger Weise durch leichtes Zusammendrücken der Trägerelement aufgehoben werden kann.

Entsprechend der bevorzugten Ausführungsform der Erfindung weist der zweite Abschnitt der Seitenwandfaltungen jeweils eine Faltenspitze auf, die in das Innere des von der Trägerelement umfaßten Volumens gerichtet ist. Diese Faltungsabschnitte begrenzen einerseits in günstiger Weise den Einschubweg beim Einbringen des Aufzeichnungsträgers in die Halteeinrichrung und schaffen andererseits entsprechend einer vorteilhaften Weiterbildung der Erfindung zwei zusätzliche Auflagepunkte für die Peripherie des Aufzeichnungsträgers. Dies wird auf einfache Weise dadurch erreicht, daß zwischen den beiden Abschnitten an den jeweiligen Faltenwänden der Seitenwandfaltung eine schräg verlaufende Trennungslinie vorgesehen ist.

Insbesondere vorteilhaft ist es, wenn die Umhüllung einen Innenquerschnitt mit zwei einander gegenüberliegenden im wesentlichen U-förmig profilierten Bereichen aufweist, welche die Faltungen aufnehmen und Führungen für diese bilden, wobei sich die von der Faltenkante des V-förmigen Bereichs abgewandten Kanten der Faltenwände im Bereich der Innenseiten der Schenkel des "U" - insbesondere unter Vorspannung - abstützen, wobei insbesondere die einander gegenüberliegenden U-förmigen Bereiche in einem festen Abstand voneinander gehalten sind. Damit können die V-förmigen Faltungen ihrerseits elastisch an den Innenseiten der U-förmigen Profile anliegen und werden dort nach Art einer Schublade geführt. Die elastische Spannung des Materials des Trägerelements sorgt jetzt dafür, daß die von freien Enden der Schenkel des V-förmigen Profils an den Innenseiten der Schenkel de "U"-förmigen Profils anliegen und dort unter Kompression des "V" eine Reibwirkung erzeugen, so daß ein unbeabsichtigtes Herausgleiten des Trägerelements aus der Umhüllung vermieden ist.

Wenn die von der Faltenkante der Faltungen abgewandten Kanten der Faltenwände der einander gegenüberliegenden Faltungen des Trägerelementes unter Einhaltung eines festen Abstands miteinander verbunden sind, kann bei Einspannung der von der Faltenkante abgewandten Kanten der Faltungen unter Kraftausübung in Richtung auf den darin befindlichen scheibenförmigen Aufzeichnungsträger der Abstand der Faltenkanten unter Vergrößerung des Spiels für den Aufzeichnungsträger im Bereich seines Umfangs heraufgesetzt werden, während bei freier, d.h. entspannter, Lagerung des Trägerelements das spiel für den Aufzeichnungsträger entsprechend verkleinert wird.

Um den Weg des Aufzeichnungsträgers innerhalb des Trägerelements mindestens in einer Richtung zu begrenzen ist es in vorteilhafter Weise vorgesehen, daß die Faltung über einen Teil ihrer Länge, für den der in der Halteeinrichtung gelagerte Aufzeichnungsträger nicht den zugehörigen Faltenwänden benachbart ist, mindestens für einen Teil der Breite der Faltenwände zu einem "V" entgegengsetzter Orientierung umgestülpt sind, so daß dieser umgestülpte "V"-förmige Bereich durch Verringerung des für die Verschiebung des Aufzeichnungträgers in der Umhüllung zur Verfügung stehenden freien Querschnitts eine einseitige Sperre gegen ein Verschieben des Aufzeichnungsträgers parallel zur Richtung der Faltung bilden.

Insbesondere ist es auch günstig, wenn die Faltenwände zu einem Profil mit Σ-förmigen Querschnitt ergänzt sind, welches den V-förmigen Bereich umfaßt, so daß die parallelen Schenkel der so ergänzten Faltenwände Gleitflächen bilden, welche an der Inneseite der "U"-förmigen Bereiche zu liegen kommen, wobei insbesondere das Trägerelement mindestens eine angelenkte Verschlußkappe aufweisen kann, welche einen stirnseitigen Verschluß für die Einschuböffnung des Aufzeichnungsträgers bildet und insbesondere mit einer Lasche versehen ist, welche vorzugsweise in einen Aufnahmebereich einschiebbar ist, der den Faltenwänden benachbart ist, die im Querschnitt entsprechend den parallelen Seiten des "Σ" gerichtet sind.

Vorzugsweise kann die Umhüllung dabei als Schuber ausgestaltet sein dabei insbesondere eine feste Umhüllung mit einer Anzahl von im wesentlichen parallelen Nuten zur Aufnahme von mehreren Trägerlementen bilden.

Bei einer anderen Variante ist die Umhüllung Teil eines Bucheinbandes und kann dabei insbesondere zur Aufnahme von Datenträgern dienen, die als Beilage zu einem Buch mit diesem zusammen vertrieben werden.

Andere vorteilhafte Weiterbildungen der Erfindung bestehen darin, daß mehrere Trägerelmente oder ihre Umhüllungen an ihren Kantenbereichen, insbesondere faltbar, miteinander verbunden sind, wobei die Verbindung an den Schmalseiten der Boden- oder Deckflächen der jeweils direkt aneinanderliegend benachbarten Trägerelemente vorgesehen ist, so daß die Faltenkanten mehrerer Trägerelemente oder die entsprechenden Kantenbereiche ihrer Umhüllungen sich zu einer zieh-harmonika-artigen und/oder die Verbindung abwechselnd an der Einschuböffnung für den Aufzeichnungsträger und an der der Einschuböffnung gegenüberliegenden Seite des jeweiligen Trägerelements bzw. Umhüllung vorgesehen ist, so daß die Trägerelemente bzw. Umhüllungen Teile einer Zick-Zack-Linie bilden. Dabei bestehen die Umhüllung und das Trägerelement einschließlich eventueller Zusatzelemente - wie bereits erläutert - bevorzugt insgesamt aus Karton. Auf diese weise lassen sich auch mehrere Aufzeichnungsträger in einheitlichen Verpackungen anbieten, welche durch Veränderung der Zusammenstellung der Trägerelemente und deren Bedruckung eine individuelle Ausgestaltung erfahren können.

Bei bevorzugten Ausgestaltungen kann die Umhüllung als einseitig mit einer Einschuböffnung versehene, im wesentlichen quaderförmige Tasche ausgebildet sein, die mit einem die Einführungsöffnung verschließenden Deckel versehen ist. Wenn der Deckel aus der Deckfläche des Basisteils längs einer, durch Perforation bestimmten Trennlinie herauslösbar ausgebildet ist kann der Vertrieb des Aufzeichnungsträgers in "versiegelter" Form erfolgen, wobei dieser erst nach Aufreißen der Trennlinie zugänglich ist. Dies ist von besonderer Bedeutung bei urheberrechtlich geschützen Aufzeichnungen, bei denen der Zugriff auf den Datenträger bleibend kenntlich gemacht werden soll.

Wenn dem Datenträger oder den Datenträgern Erläuterungen von relativ geringem Umfang beigefügt werden sollen, ist es günstig, wenn an der Innenseite des Deckels mindestens eine, insbesondere klappbare, der Befestigung eines Beiheftes dienende Haltelasche vorgesehen ist, welche vom Rand her über das Beiheft eingeschlagen werden kann und diesen vor dem Herausfallen sichert, wenn die Anordnung von Trägerelement(en) oder Trägerelement und Umhüllung in der Weise "geschlossen" ist, daß an den Haltelaschen beiseitig Flächebereiche anliegen, welche sie in eingeschlagenem Zustand halten, in dem sie mindestens Teile des Beihefts umgreifen.

Vorteilhaft ist es weiterhin, wenn die verschiedenen Teile der Verpackung - dabei bevorzugt die Abmessungen ihrer Deckflächen - im wesentlichen übereinstimmende Grundrisse aufweisen, welche den entsprechenden Abmessungen üblicher CD-Verpackungen entsprechen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: eine bevorzugte Ausführungsform der Erfindung in schematisierter Darstellung,
- Figur 1a: eine Querschnittsdarstellung längs der Linie A...A durch eine erfindungsgemäße Verpackung gemäß Figur 1,
- Figur 1b: eine günstige Weiterbildung der in Figur 1 dargestellten Ausführungsform der Erfindung,
- Figur 1c: die in Figur 1b gezeigte Ausführungsform der Erfindung in ungeöffnetem Zustand.
- Figur 2: eine andere vorteilhafte Ausführungsform der Erfindung,
- Figur 3: eine günstige Weiterbildung der in Figur 2 dargestellten Erfindung,
- Figur 4: eine günstige Weiterbildung der in Figur 1 dargestellten Erfindung,
- Figur 5: eine vorteilhafte Ausführungsform des in einer Verpackung gemäß den Figuren 1 bis 4 vorgesehenen Trägerelements,
- Figur 6: eine andere günstige Ausführungsform einer Trägerelement,
- Figur 7: die Darstellung eines Trägerelements gemäß Figur 5 zusammen mit einem Aufzeichnugsträger,
- Figur 8: die Draufsicht auf ein Trägerelement gemäß Figur 5 mit eingebrachtem Aufzeichnungsträger,
- Figur 8a: die in Figur 8 gezeigte Anordnung in Ansicht von vorn,
- Figur 9: die schematisierte Darstellung der in Figur 6 gezeigten Einrichtung mit positioniertem Aufzeichnungsträger,
- Figur 10: die Draufsicht auf einen ungefalteten Zuschnitt für ein Trägerelement gemäß Figur 6 sowie
- Figur 11: eine vorteilhafte Weiterbildung des in Figur 5 gezeigten Trägerelements in schematisierter Darstellung.

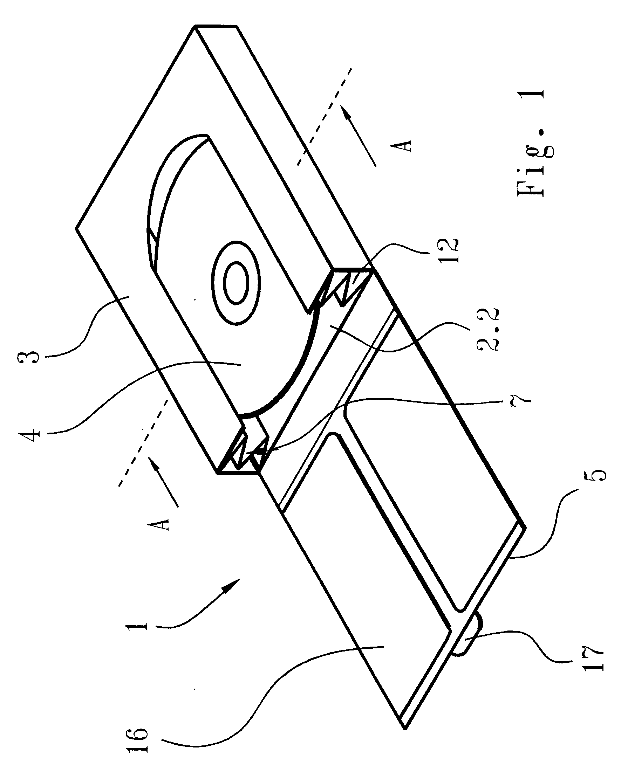

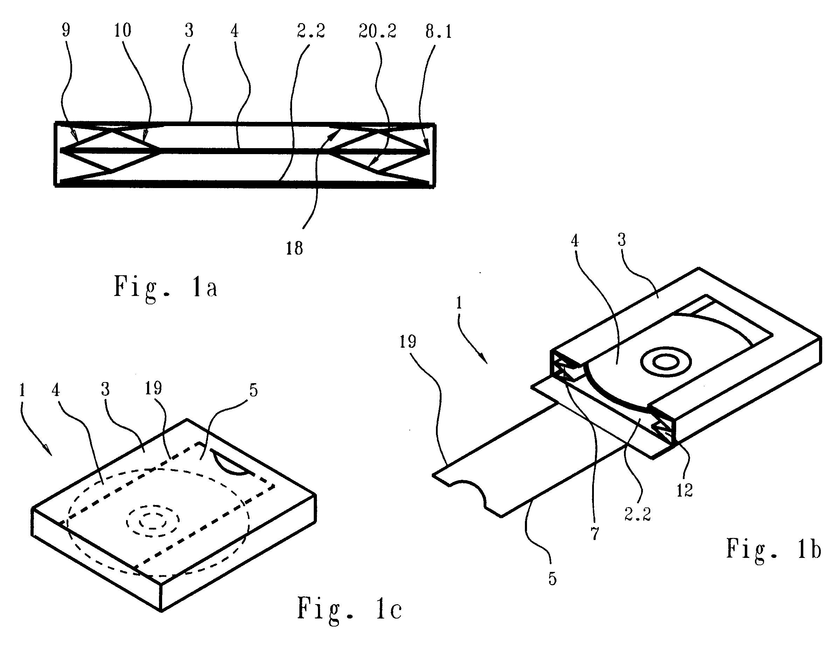

Die in Figur 1 als Ausführungsbeispiel perspektivisch dargestellte Verpackung 1 für einen scheibenförmigen Aufzeichnungsträger 4, vorzugsweise eine Compact-Disk oder eine CD-ROM, besteht aus einem taschenförmigen ein Trägerelement bildenden Umhüllung 3, an welches einseitig ein Zusatsteil 5 an-gelenkt ist, das als Deckel für die Umhüllung 3 dient. In dem von der Umhüllung 3 umschlossenen Hohlraum ist das Träge-relement 2.2 für den Aufzeichnungsträger 4 angeordnet. Das Trägerelement ist als im wesentlichen quaderförmiger Einschub mit offenen Strinflächen ausgestaltet. Es weist in vorteilhafter Weise zwei im wesentlichen zieharmonikaartig gefaltete Seitenwände 12 von symmetrischem Aufbau auf. Die mittelere im Querschnitt V-förmige Falte 7 der Seitenwandfaltung dient jeweils als Aufnahme für den scheibenförmigen Aufzeichnungsträger 5, der in günstiger Weise nur an seiner Peripherie von der jeweiligen Falte 3 formschlüssig in der Verpackung fixiert wird. Da die Umhüllung 3 in günstiger Weise eine teilweise offene Deckfläche aufweist, bereitet die Handhabung des Aufzeichnungsträgers 4 beim Entnehmen aus der Verpackung 1 bzw. beim erneuten Einbringen keinerlei Schwierigkeiten.

Das an die Bodenfläche der Umhüllung 3 angelenkte deckelförmige Zusatzteil 5 trägt an seiner Innenseite zwei gleichartig ausgebildete Haltelaschen 16, mit denen ein, der Information über den Dateninhalt auf dem Aufzeichnungsträger 4 dienendes Beiheft auf einfache Weise innerhalb der Verpackung 1 sicher positioniert werden kann. Die an dem freien Ende des Deckels 5 vorgesehene Einstecklasche 17 dient der Arretierung des Deckels 5 bei geschlossener Verpackung 1.

Die Einzelteile 2.2, 3 und 5 der Verpackung 1 bestehen in günstiger Weise material-einheitlich aus Faltkarton. Dadurch ergeben sich besondere Vorteile bei ihrer Herstellung, ihrer automatisierten Bestückung mit Aufzeichnungsträgern und letztendlich beim Recycling der Verpackung.

Die Schnittdarstellung gemäß Figur 1a längs der angedeuteten Linie A...A zeigt die vorteilhafte Position des Aufzeichnungsträgers 4 innerhalb der Umhüllung 3 der Verpackung. Die V-förmige mittlere Falte (Position 7 in Figur 1) ist in Längsrichtung in zwei Abschnitte 9 und 10 unterteilt. Bei dem in Einschubrichtung des Aufzeichnungsträgers 4 vorn liegende Abschnitt 9 der mitteleren Falte weist die Faltenkante 8.1 aus dem von dem Trägerelement 2.2 umfaßten Volumen heraus, wogegen der zweite Abschnitt 10 eine nach innen gerichtete Faltenkante aufweist. Der Aufzeichnungsträger 4 ruht mit seinem peripheren Rand zwischen den Faltenwänden 20.2 des ersten Abschnitts 9 der Falte im Bereich der Faltenspitze 8.1. Die in das Innerere der Trägerelement 2.2 weisende Faltenkante des zweiten Abschnitts 10 der mitteleren Falte stützt den Aufzeichnungsträger 4 an zwei Punkten seiner Peripherie und dient hauptsächlich der Begrenzung seines Einschubwegs.

Die formschlüssige Positionierung des Aufzeichnungsträgers 4 innerhalb der Faltungsabschnittes 9 der Seitenwand des Trägerelements 2.2 gewährleistet auf einfache und vorteilhafte Weise eine "schwebende" Lagerung, bei der nur die Peripherie des verpackten Aufzeichnungsträgers 4 in geringem Maße mechanisch belastet ist und die datentragenden Oberflächenbereiche in der Mitte des Aufzeichnungsträgers 4 keinen Kontakt mit Verpackungsteilen aufweisen. Der geringfüge Kraftschluß - bedingt durch das Bestreben der gefalteten Seitenwand, eine gestreckte Form einzunehmen - zwischen der Peripherie des Aufzeichnungsträgers 4 und den entsprechenden Faltenteilen 20.2 im Bereich der Faltenkanten 8.1 fixiert den Aufzeichnungsträger stabil in seiner Verpackungsposition und kann gegebenenfalls durch leichten Druck senkrecht zur Oberfläche des Aufzeichnungsträgers weiter herabgesetzt werden, um das Entnehmen des Aufzeichnugsträgers 4 weiter zu erleichtern.

Die Haltevorrichtung 2.2 ist durch Einschieben in das Basisteil positionierbar und wird sowohl formschlüssig als auch - durch von den Faltenteilen auf Boden- und Deckfläche der Umhüllung 3 ausgeübten Druck bedingt - kraftschlüssig in der gezeigten Lage fixiert.

In den Figuren 1b und 1c ist eine günstige Weiterbildung der in Figur 1 gezeigten Verpackung 1 in geöffnetem bzw. geschlossenem Zustand in schematisierter Form dargestellt. Der Verpackungsdeckel 5 ist als Element der Deckfläche der Umhüllung 3 ausgebildet. Er kann auf einfache Weise durch Trennen einer Perforationskante 19 aus der Deckfläche herausgelöst werden, wenn der im Öffnungsbereich der Falte 7 positionierte Aufzeichnungsträger 4 herausgenommen werden soll.

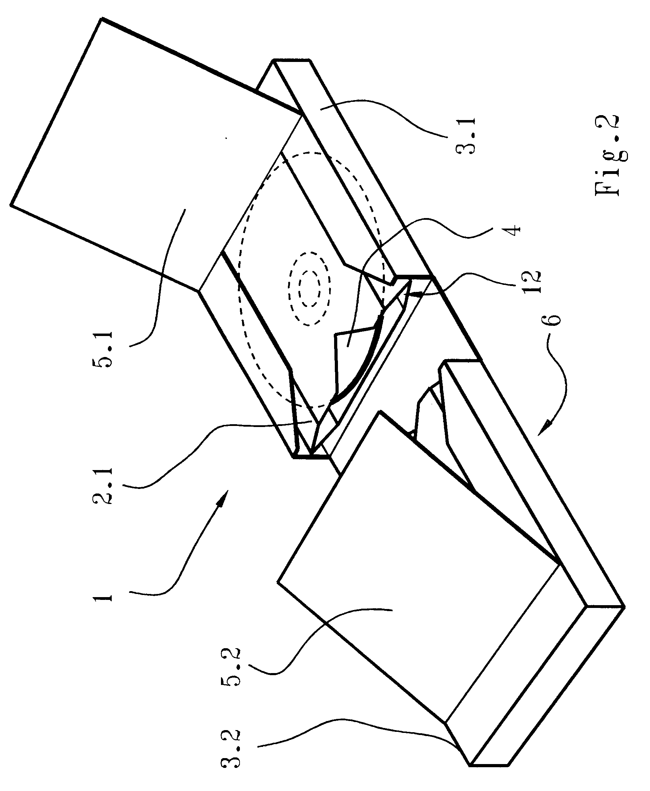

Figur 2 zeigt die perspektivische Darstellung einer anderen Ausführungsform der erfindungsgemäßen Verpackung 1, die aus zwei gleichartigen Umhüllungen 3.1 und 3.2 besteht, an deren Deckfläche jeweils ein als Deckel dienendes Zusatzteil 5.1 bzw. 5.2 klappbar befestigt ist. Während die Faltung bei dem in Figur 1 dargestellten Ausführungbeispiel an jeder Seite einen Σ-förmigen Querschnitt aufweist, wird bei dem hier dargestellten Ausführungsbeispiel ausschließlich von einem beidseitig V-förmigen Falt querschnitt Gebrauch gemacht. Das Trägerelement 2.1 für den Aufzeichnungsträger 4 weist damit eine, jeweils nur aus einer Falte bestehende Seitenwand 12 auf. Die Umhüllungen bilden mit ihrem Deckel und der entsprechenden Trägerelemente in vorteilhafter Weise gleichartig aufgebaute Module 6 eines unterschiedlich ausgestaltbaren Verpackungssystem für derartige scheibenförmige Aufzeichnungsträger.

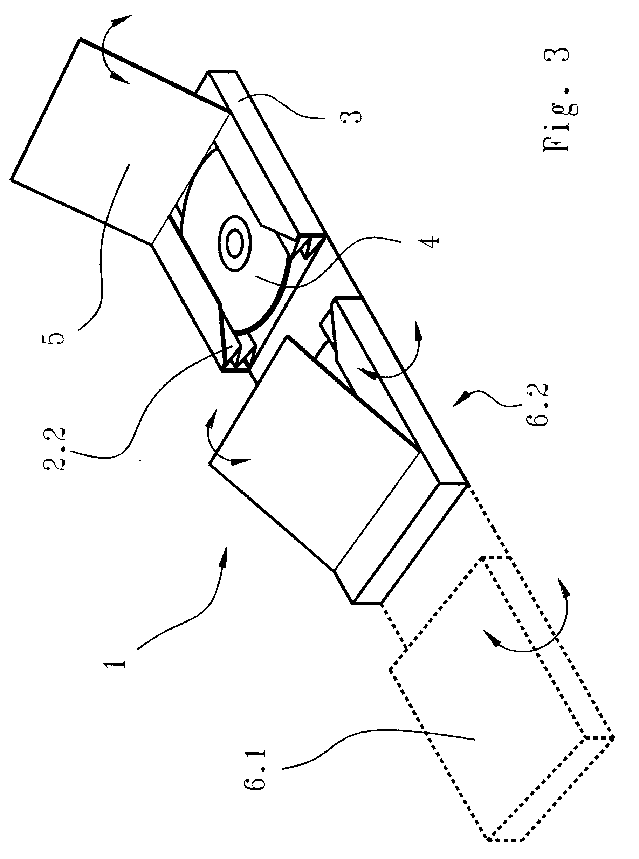

Entsprechend der perspektvischen Darstellung in Figur 3 besteht die Verpackung 1 aus einer, einen Deckel 5 aufweisenden Umhüllung 3, die mit zwei weiteren Verpackungsmodulen 6.1 und 6.2 klappbar verbunden ist. Werden die einzelnen Elemente 3, 5, 6.1 und 6.2 der Verpackung 1 - wie durch die Pfeile angedeutet - zusammengeklappt, entsteht in günstiger Weise eine Verpackung, die nur einen geringen Platzbedarf aufweist und in der die Aufzeichnungsträger durch die schwebend gehaltene Lagerung gut zugänglich und vor allem beschädigungssicher aufbewahrbar sind.

Es ist ersichtlich, daß bei den Umhüllungen der Figuren 1 bis 3 diese ein Faltenbereiche der Trägerelemente jeweils mit U-förmigen Bereichen umgreifen und somit Führungen für die Trägerelemente bilden, in denen diese verschiebbar sind. Damit können jeweils zunächst die Trägerelemente aus ihren Umhüllungen mindestens teilweise herausgezogen werden, so daß dann - beispielsweise nach Lesen der Beschriftung und Auswahl - der gewünschte Aufzeichungsträger aus dem Trägerelement vollends hervorgezogen werden kann.

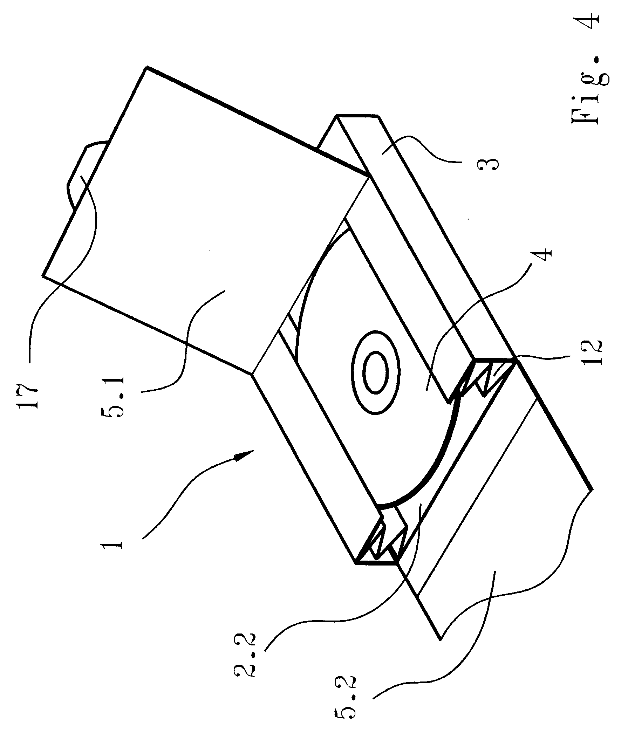

Die in Figur 4 gezeigte Weiterbildung der Verpackung 1 besitzt zwei deckelförmige Zusatzteile 5.1 und 5.2, welche mit entgegengesetzter Schließrichtung an die Umhüllung 3 angelenkt sind. Die gegenseitige Verriegelung der Deckel erfolgt durch eine Einstecklasche 17, die an dem freien Ende eines der Zusatzteile 5.1 vorgesehen ist und den anderen Deckel 5.2 an geeigneter Stelle hintergreift, wenn die Verpackung verschlossen ist. Der Aufzeichnungsträger 4 befindet sich, wie vorab beschrieben, in einer Halteeinrichtung 2.2 mit mehrfach gefalteten Seitenwänden 12.

Die deckelförmigen Zusatzteile 5, 5.1, 5.2 der Verpackung 1 sind besonders für Wort- und Bildaufdrucke geeignet, durch welche in ausreichendem Maße Hinweise auf die auf dem Aufzeichnungsträger vorhandenen Informationsen gegeben werden.

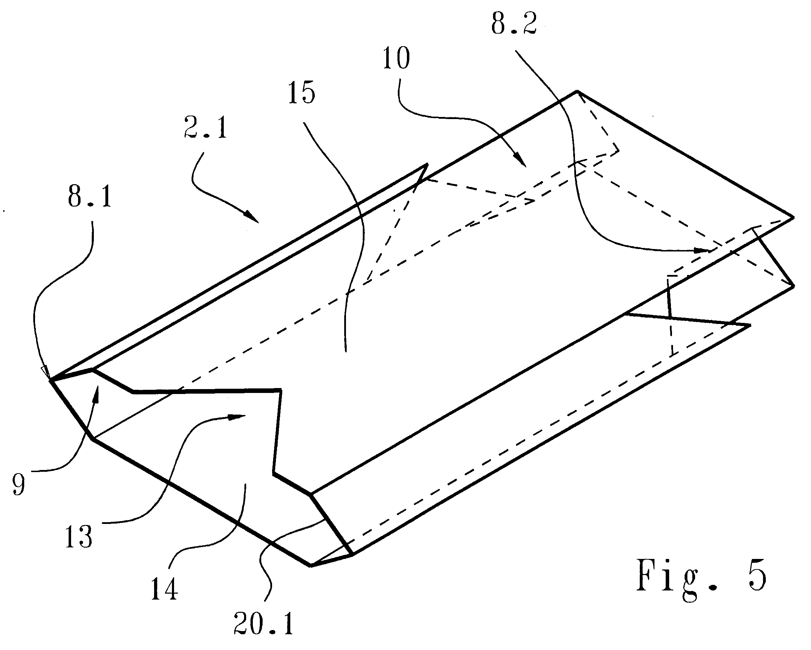

Figur 5 zeigt die perspektivische Darstellung einer vorteilhaften Ausführungsform der Halteeinrichtung 2.1, die als quaderförmiger Einschub mit geöffneter Vorder- und Rückwand ausgebildet ist und zwei, jeweils aus einer Falte mit zwei Faltenteilen 20.1 von unter sich gleicher Breite bestehende, Seitenwände aufweist. Die Seitenwandfalte ist in zwei, hintereinanderliegende Abschnitte 9 und 10 gegliedert, die eine unterschiedliche Längsausdehnung und unterschiedliche Richtung der Faltenkanten 8.1 und 8.2 aufweisen. Die Boden- und Deckfläche 14 und 15 der Halteeinrichtung sind im wesentlichen geschlossen. Die in der Deckfläche 15 vorgesehene dreieckförmige Ausnehmung 13 erleichtert in günstiger Weise das Einbringen eines Aufzeichnugsträgers in die Verpackung bzw. dessen erneute Entnahme.

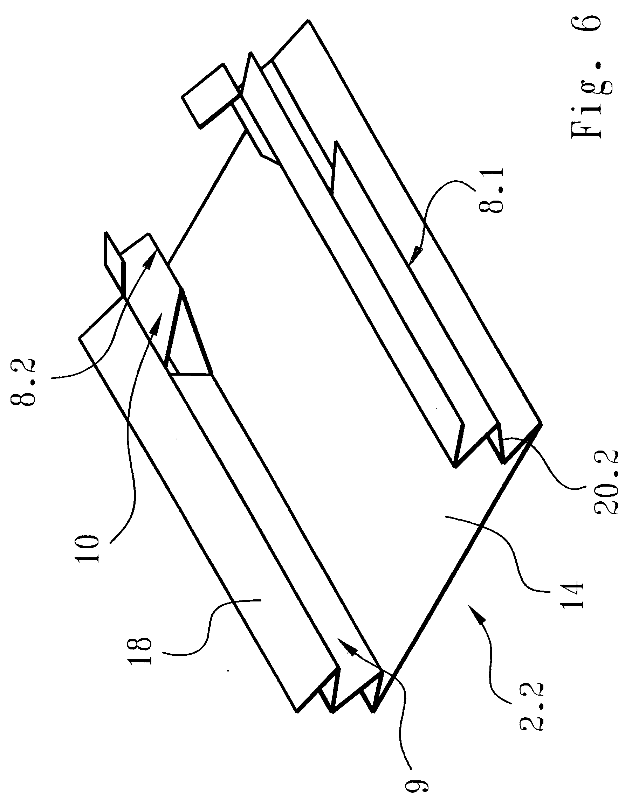

Das in Figur 6 schematisiert dargestellte Trägerelement 2.2 weist bei fortgelassener Deckfläche zwei, jeweils mehrfach gefaltete Seitenwände, die eine Verbindung mit der Bodenfläche 14 aufweisen. Die in der Mitte der Seitenwand befindliche Falte ist in zwei Abschnitte 9 und 10 gegliedert, deren Faltenkanten 8.1 und 8.2 eine unterschiedliche Ausrichtung besitzen. Der mit nach außen weisenden Faltenkanten 8.1 versehene Abschnitt 9 dient zur Aufnahme des Aufzeichnungsträgers, während der Abschnitt 10 durch die, in das Innere der Trägerelement 2.2 weisende Faltenspitze 8.2 zur Begrenzung des Einschubweges beim Einbringen des Aufzeichnungsträgers in die Verpackung benutzt wird. Die Stützteile 18 der gefalteten Seitenwand befinden sich bei einer, in ein Umhüllung eingebrachten Trägerelement 2.2 in Wirkkontakt mit der Deckfläche des Umhüllungs (vergleiche Positionen 3 und 18 in Figur 1a) und stabilisieren dadurch die senkrechte Stellung der Seitenwände.

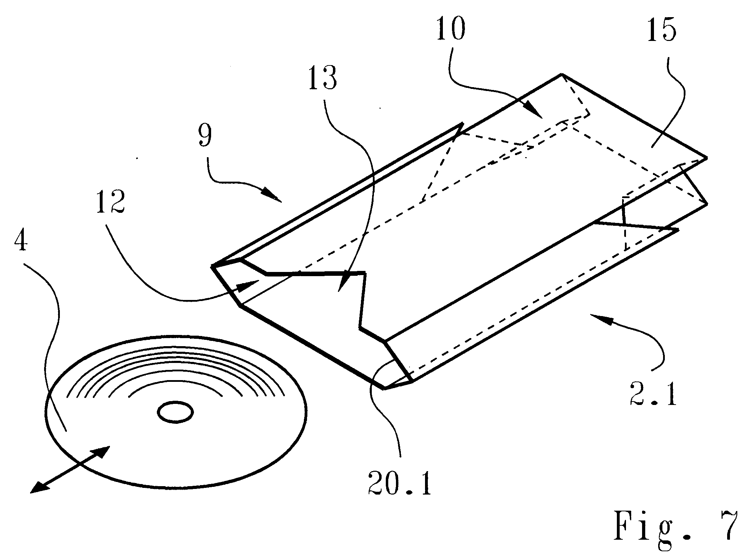

Die Figuren 7, 8, 8a und 9 zeigen in schematisierter Form die Trägerelemente 2.1 und 2.2 der Verpackung mit in sie einzubringende bzw. durch sie positionierte Aufzeichnungsträger 4. Die in zwei Abschnitte 9 und 10 geteilte Falte 7 in der Mitte der gefalteten Seitenwand 12 gewährleistet, daß der zwischen den, in die Faltenspitzen 8.1 und 8.2 auslaufenden Faltenteilen eingeschobene (vergleiche Pfeilrichtung in Figur 7) nur an seiner Peripherie mit der Trägerelement 2.1 bzw. 2.2 in Wirkungseingriff gelangt. Eine Berührung der empfindlichen Oberfläche des Aufzeichnungsträgers 4 mit der Bodenfläche 14 oder der Deckfläche 15 der Trägerelement 2.1 bzw. 2.2 wird durch dieses Lagerungsprinzip in vorteilhafter Weise vermieden, da sich der Aufzeichnungsträger 4 im wesentlichen nur an vier Punkten auf der jweiligen Trägerelement abstützt. Die Faltenkanten 8.2 begrenzen gleichzeitig den Einschubweg für den Aufzeichnungsträger 4. Die gefalteten Seitenwände 12 der Trägerelemente 2.1 und 2.2 ermöglichen aufgrund ihrer Nachgiebigkeit (senkrecht zur Boden- bzw. Deckfläche des Trägerelements) in günstiger Weise eine ausreichend elastische Lagerung des Aufzeichnungsträgers, welche diesen vor möglichen stoßartigen Belastungen schützt.

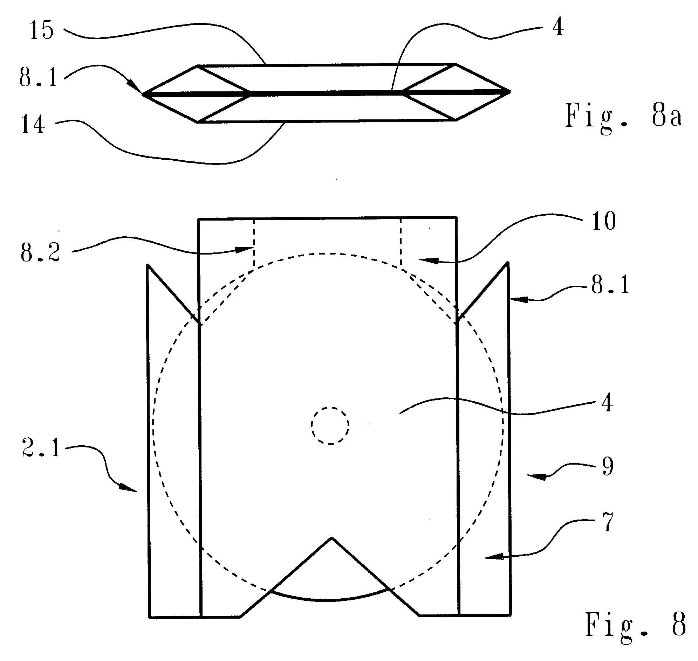

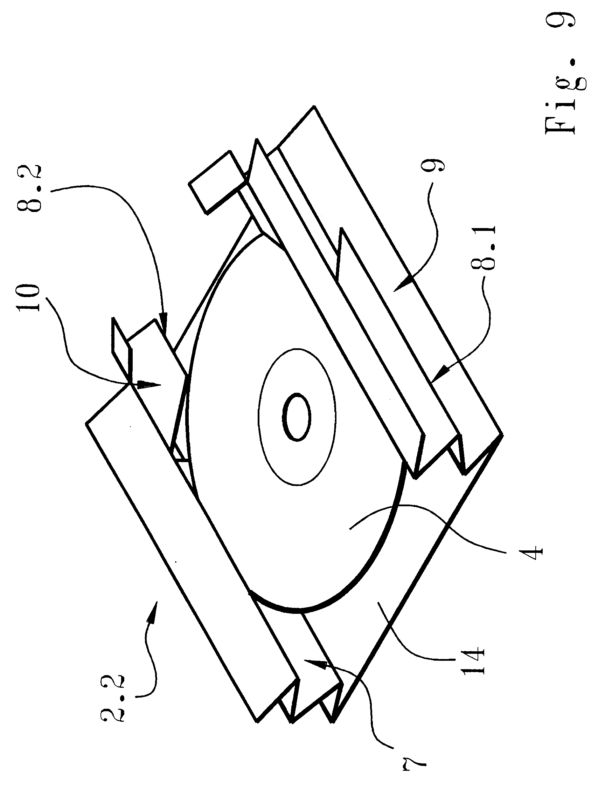

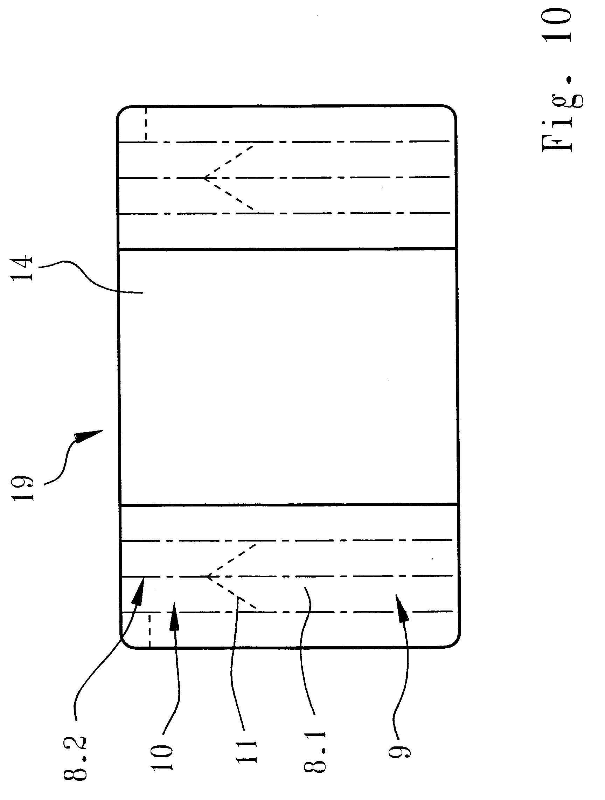

Figur 10 zeigt als Draufsicht einen ungefalteten Stanzling 19, aus dem eine, der in den Figuren 6 und 9 dargestellte Trägerelement herstellbar ist. Die gestrichelten Linien stellen geschnittene Kanten, die strich-punktierten Linien dagegen die Faltkanten der Seitenwandfaltung dar, aus denen u.a. die Faltenkanten 8.1 und 8.2 gebildet werden. Die schräg verlaufenden Schnittkanten 11 gewährleisten in günstiger Weise einerseits, daß bei der Faltung des Stanzlings 19 zu der gewünschetn Haltevorrichtng die Faltenspitzen 8.1 und 8.2 in unterschiedliche Richtung weisen und andererseits, daß auch im Bereich der faltenspitzen 8.2 des zweiten Abschnitts 10 der Mittelfalte 7 zwei Auflagepunkte für den Aufzeichnungsträger 4 (vergleiche Figur 8) zur Verfügung stehen, wenn dieser in das Trägerelement eingeschoben worden ist.

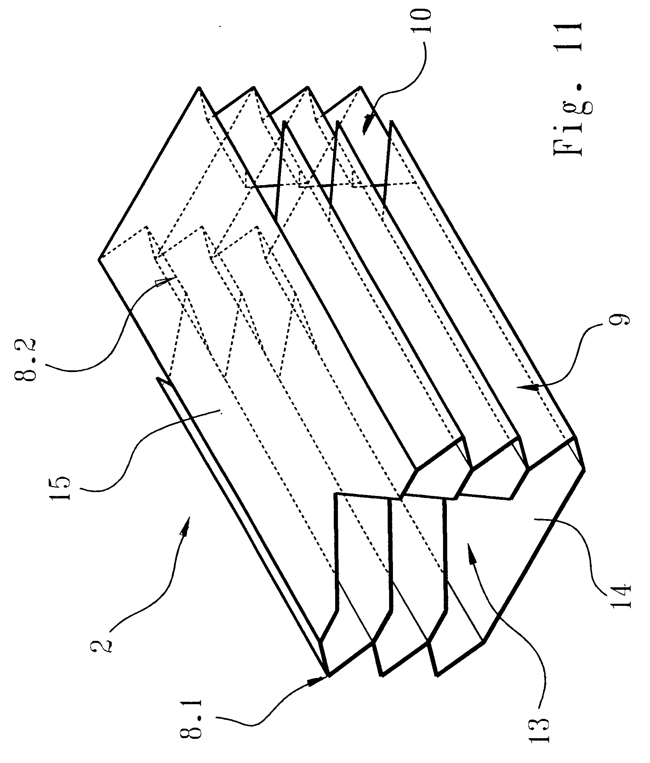

Die in Figur 11 gezeigte Halteinrichtung 2 weist drei übereinander angeordnete und unter sich gleichartig ausgebildete Einschübe auf, wie sie in den Figuren 5 und 7 dargestellt sind. Eine Verwendung derartiger Trägerelemente in Verpackungen für scheibenförmige Aufzeichnungsträger ist bei Nutzung aller vorstehend beschriebenen günstigen Eigenschaften vor allem dann von besonderem Vorteil, wenn mehrere dieser Trägerelemente mit nach oben weisenden Ausnehmungen 13 senkrecht stehend in einem einseitig offenen, kastenförmigen und durch einen Deckel verschließbaren Umhüllung angeordnet sind und eine größere Anzahl von Aufzeichnungsträgern automatisiert verpackt werden soll.

Es ist ersichtlich, daß die Erfindung in unterschiedlichsten Konfigurationen realisiert werden kann. Das erfindungsgemäße Trägerelement kann also einerseits selbst die einzige Verpackung für einen scheibenförmigen Aufzeichnungsträger bilden, der in die einander gegenüberliegenden Führungen der Faltung einschiebbar ist. Mehrfach in Etagen übereinander vorgesehene Faltungen können dabei entsprechend auch mehrere Aufzeichnungsträger aufnehmen. Ein derartiges Trägerelement kann entweder mit mehreren gleichartigen weiteren Trägerelementen und gegebenenfalls Deckflächen als äußerer Abschluß zu einem Gebilde vereinigt werden, welches entweder als Buch mit einer Bindung nach Art eines Buchrückens oder zick-zackförmig leporelloartig auseinanderfaltbar zusammenhängt. Entsprechend kann kann der Zusammenhang der einzelnen Trägerelemente auch durch scharnierartige Verbindungen an ihren Kanten patchworkartig ausgeführt sein, so daß die Aufzeichungsträger aus einem Aufbewahrungszustand der Verpackung mit kleiner Oberfläche in einen Auswahlkonfiguration überführbar sind, bei der die Trägerelemente seitlich nebeneinander in einer Ebene liegen.

Darüber hinaus können auch mehrere Trägeelemente mit ihren Deckflächen aneinandergrenzend zu Einheiten verbunden sein, welche mehrere Aufzeichnungsträger in einer Stapelkonfiguration aufnehmen.

Die Trägerelemente sind nun ihrerseits entweder einzeln oder zu mehereren nebeneinander in Schuber einschiebbar, welche eine Umhüllung bilden. Diese können nun ihrerseits wieder untereinnander faltbar verbunden oder in eine weitere derartige Umhüllung einschiebbar ausgestaltet sein.

Entsprechend kann die Kombination mit Beiheften und anderen gedruckten oder sonstigen Aufzeichnungsträgern erfolgen, die im Zusammenhang mit den aufzubewahrenden Aufzeichnungsträgern bedeutsamt Informationen enthalten.

Die Erfindung beschränkt sich damit in ihrer Ausführung nicht auf die vorstehend angegebenen bevorzugte Ausführungsbeispiele. Vielmehr ist eine Anzahl von Varianten denkbar, welche von der dargestellten Lösung in flexibler Weise auch bei grundsätzlich anders gearteten Ausführungen Gebrauch macht.

## Patentansprüche

1. Verpackung für mindestens einen scheibenförmigen Aufzeichnungsträger, vorzugsweise eine Compact-Disk oder CD-ROM, bestehend aus einem Trägerelement zur Halterung des Aufzeichnungsträgers unter geringflächigem mechanischem Kontakt zwischen Aufzeichnungsträger und Trägerelement,
**dadurch gekennzeichnet,**
daß das Trägerelement (2.2, 9) ausschließlich aus einem folienförmigen, insbesondere kartonartigen Werkstoff besteht, der mit einer verbleibenden Vorspannung wölb- oder faltbar ist, wobei
zwei in einem Abstand, der im wesentlichen dem Durchmesser des Aufzeichnungsrägers entspricht, gehaltene, und im wesentlichen parallel gerichtete, V-förmig profilierte - als Winkel gefaltete oder in sonstiger Weise verbundene - Faltungen bildende Bereiche (20.1, 20.2) vorgesehen sind, deren Öffnungsseiten einander zugewandt sind,
der Aufzeichnungsträger (4) von mindestens einer Seite her in die Faltungen derart einschiebbar ist, daß die Faltenkanten tangential zum Außenumfang des Aufzeichnungsträgers gerichtet sind und der Aufzeichnungsträger im Bereich seines Umfangs im wesentlichen ausschließlich innerhalb der V-förmig profilierten Bereiche geführt bzw. gehalten ist und
an die Faltenkanten (8.1) der Faltungen jeweils an Faltenwände (20.1, 20.2) anschließen, welche im wesentlichen streifenförmig ausgebildet sind und sich über diejenigen ihrer Kanten, die von der Faltenkante des v-förmigen Bereichs abgewandt sind, innerhalb der Umhüllung und/oder an benachbarten Trägerelementen abstützen, so daß das Trägerlement in diesen Bereichen geführt ist, während sich der Aufzeichnungsträger seinerseits in der Tiefe des V-förmigen Bereichs in der Nähe der Faltenkanten abstützt.

2. Verpackung nach Anspruch 1, **dadurch gekennzeichnet,** daß die Umhüllung einen Innenquerschnitt mit zwei einander gegenüberliegenden im wesentlichen U-förmig profilierten Bereichen aufweist, welche die Faltungen aufnehmen und Führungen für diese bilden, wobei sich die von der Faltenkante des V-förmigen Bereichs abgewandten Kanten der Faltenwände im Bereich der Innenseiten der Schenkel des "U" - insbesondere unter Vorspannung - abstützen.

3. Verpackung nach einem der vorangehenden Ansprüche, **dadurch gekennzeichnet,** daß die einander gegenüberliegenden U-förmigen Bereiche in einem festen Abstand voneinander gehalten oder verbunden sind.

4. Verpackung nach einem der vorangehenden Ansprüche, **dadurch gekennzeichnet,** daß die Faltung über einen Teil ihrer Länge, für den der in der Halteeinrichtung gelagerte Aufzeichnungsträger nicht den zugehörigen Faltenwänden benachbart ist, mindestens für einen Teil der Breite der Faltenwände zu einem "V" entgegengsetzter Orientierung umgestülpt sind, so daß dieser umgestülpte "V"-förmige Bereich durch Verringerung des für die Verschiebung des Aufzeichnungträgers in der Umhüllung zur Verfügung stehenden freien Querschnitts eine einseitige Sperre gegen ein Verschieben des Aufzeichnungsträgers parallel zur Richtung der Faltung bilden.

5. Verpackung nach einem der vorangehenden Ansprüche, **dadurch gekennzeichnet,** daß die Faltenwände zu einem Profil mit Σ-förmigen Querschnitt (Figur 6) ergänzt sind, welches den V-förmigen Bereich einschließt.

6. Verpackung, insbesondere nach Anspruch 5, **dadurch gekennzeichnet,** daß das Trägerelement mindestens eine angelenkte Verschlußkappe aufweist, welche einen stirnseitigen Verschluß für die Einschuböffnung des Aufzeichnungsträgers bildet und insbesondere mit einer Lasche versehen ist, welche vorzugsweise in einen Aufnahmebereich einschiebbar ist, der den Faltenwänden benachbart ist, die im Querschnitt entsprechend in etwa entsprechend den äußeren Seiten des "Σ" gerichtet sind.

7. Verpackung nach einem der vorangehenden Ansprüche, **dadurch gekennzeichnet,** daß die Umhüllung als Schuber ausgestaltet ist und dabei insbesondere eine feste Umhüllung mit einer Anzahl von im wesentlichen parallelen Nuten zur Aufnahme von mehreren Trägerlementen bildet.

8. Verpackung nach einem der vorangehenden Ansprüche, **dadurch gekennzeichnet,** daß die Umhüllung Teil eines Bucheinbandes ist.

9. Verpackung nach einem der vorangehenden Ansprüche, **dadurch gekennzeichnet,** daß mehrere Trägerelmente (2.1) oder ihre Umhüllungen an ihren Kantenbereichen, insbesondere faltbar, miteinander verbunden sind, wobei die Verbindung an den Schmalseiten der Boden- oder Deckflächen (14, 15) der jeweils direkt aneinanderliegend benachbarten Trägerelemente (2.1) bzw. den Schmalseiten der Umhüllungen vorgesehen ist, so daß die Faltenkanten mehrerer Trägerelemente bzw. der Schmalseiten der Umhüllungen sich zu einer zieh-harmonika-artigen und/oder die Verbindung abwechselnd an der Einschuböffnung für den Aufzeichnungsträger (4) und an der der Einschuböffnung gegenüberliegenden Seite des jeweiligen Trägerelements (2.1) bzw. der Umhüllung vorgesehen ist, so daß die Trägerelemente bzw. Umhüllungen Teile einer Zick-Zack-Linie bilden.

10. Verpackung nach einem der vorangehenden Ansprüche, **dadurch gekennzeichnet,** daß die Umhüllung (3, 3.1, 3.2) und das Trägerelement (2, 2.1, 2.2) einschließlich eventueller Zusatzelemente aus Karton bestehen.

11. Verpackung nach einem der vorangehenden Ansprüche, **dadurch gekennzeichnet,** daß die Umhüllung (3, 3.1, 3.2) als einseitig mit einer Einschuböffnung versehene, im wesentlichen quaderförmige Tasche ausgebildet ist und als Zusatzelement (5, 5.1, 5.2) ein, die Einführungsöffnung verschließender Deckel vorgesehen ist.

12. Verpackung nach Anspruch 11, **dadurch gekennzeichnet,** daß an der Innenseite des Deckels (5) mindestens eine, insbesondere klappbare, der Befestigung eines Beiheftes dienende Haltelasche (16) vorgesehen ist.

13. Verpackung nach Anspruch 11, **dadurch gekennzeichnet,** daß der Deckel (5, 5.1) an seinem freien Ende eine, im wesentlichen teilkreisförmige Einstecklasche (17) aufweist.

14. Verpackung nach einem der vorangehenden Ansprüche, **dadurch gekennzeichnet,** daß die verschiedenen Teile der Verpackung, insbesondere der Trägerelemente und Umhüllungen, im wesentlichen übereinstimmende Grundrisse aufweisen.

15. Verpackung nach Anspruch 11, **dadurch gekennzeichnet,** daß der Deckel (5) aus der Deckfläche des Basisteils (3) längs einer, durch Perforation bestimmten Trennlinie (19) herauslösbar ausgebildet ist.
